# EUROPÄISCHE PATENTSCHRIFT

(11) **EP 0 957 146 B1**
(45) Veröffentlichungstag und Bekanntmachung des Hinweises auf die Patenterteilung: **18.02.2004**
(21) Anmeldenummer: 99107261.2
(22) Anmeldetag: 14.04.1999
(51) Int. Cl.: C09J 7/02

(54) **Klebeband mit vorbehandeltem Zwischenträger**
Adhesive tape with pre-treated intermediate layer
Ruban adhésif ayant une couche intermédiaire prétraitée

(30) Priorität: 09.05.1998 DE 19820858
(43) Veröffentlichungstag der Anmeldung: 17.11.1999
(73) Patentinhaber: Tesa AG, 20253 Hamburg (DE)
(72) Erfinder: Lühmann, Bernd Dr., 22844 Norderstedt (DE); Junghans, Andreas, 22457 Hamburg (DE)

(56) Entgegenhaltungen:
- EP-A- 0 838 182
- EP-A- 0 845 514
- WO-A-95/06691
- DE-A- 4 339 604

## Beschreibung

Die Erfindung betrifft ein Klebeband für eine durch Zug rückstandsfrei und beschädigungsios wiederlösbare Verklebung, sowie seine Verwendung.

Hochdehnbare elastische Klebfolien für wiederlösbare Verklebungen, die durch Ziehen im wesentlichen in Richtung der Verklebungsebene wiederlösbar sind, sind bekannt und im Handel unter der Bezeichnung "tesa Power-Strips" erhältlich. Damit hergestellte Verklebungen bieten kraftvollen Halt und lassen sich doch spurlos wiederablösen ohne Beschädigung des Untergrundes oder der Fügeteile, wie dies in DE 33 31 016 C2 beschrieben ist. **DE 4.222.849, DE 4.233.872, DE 4.428.587, DE 4.431.914, DE 19511 288** und **DE 197 08 366** beschreiben u.a. spezielle Ausführungen und Applikationen vorgenannter Klebfolien.

Mehrschichtige Klebfolien, welche hoch dehnbare wenig elastische oder auch hochdehnbare elastische Folienträger enthalten sowie Anwendungen selbiger Klebstoff-Folien sind ebenfalls bekannt, so aus **US 4,024,312** "Pressure-Sensitive Adhesive Tape for medical use - having an extensibte, elastic block copolymer backing", **WO 92/11332** "Removable Adhesive Tape" (PSA tape using highly extensible backing with photopolymerized acrylic PSA), **WO 92/11333** (PSA tape using highly extensible essentially inelastic backing), WO **93/01979** "Sichem von Stapeln mit Stretch-Klebeband" und **WO 94/21157** "Article Support using stretch releasing adhesive".

So beschreibt WO 92/11333 ein durch Ziehen in der Verklebungsebene wiederablösbares Klebeband, welches als Träger eine hochverstreckbare, im wesentlichen nicht rückstellende (nicht kautschukelastische) Folie nutzt, die nach Verstreckung < ca. 50% Rückstellvermögen aufweist. Die für den Ablöseprozeß benötigte Reißfestigkeit bei gleichzeitig hoher Dehnung wird durch den verwendeten Träger erzeugt. US 4,024,312 beschreibt entsprechend entklebende Selbstklebebänder von im wesentlichen kautschukelastischer Natur.

In der Praxis zeigt sich, daß bei der Auswahl der Trägerfolien sehr spezielle Anforderungen an selbige zu stellen sind. So sind Folien, welche einen hohen Streckmodul aufweisen und / oder Folien, welche nur geringe maximale Dehnungen aufweisen nicht geeignet, da aus ihnen hergestellte Klebstofffolien nicht genügend leicht und / oder nicht genügend stark verstreckt werden können, um durch Verstrecken im wesentlichen in der Verklebungsebene rückstands- und zerstörungsfrei von den Verklebungsuntergründen wiederabgelöst werden zu können. Auch sind durch vorgenannte Restriktionen sehr dicke Folienträger i. a. nicht einsetzbar.

In der Praxis zeigt sich weiter, daß mit den zuvor genannten Selbstklebebändern auf glatten und festen Untergründen im Allgemeinen hohe Verklebungsfestigkeiten erreicht werden können. Auf rauhen Untergründen ist die Verklebungsfestigkeit insbesondere für Selbstklebebänder von geringer Dicke, jedoch auch für solche höherer Schichtstärke, für zahlreiche Anwendungen ungenügend. Ursache für die unzureichende Verklebungsfestigkeit ist wahrscheinlich vornehmlich eine nicht ausreichende Verklebungsfläche, bedingt durch eine zu niedrige Konformibilität der Klebebänder an rauhe und unregelmäßige Oberflächen, insbesondere wenn zwei rauhe Untergründe miteinander verklebt werden sollen. Z. B. werden bei Verklebungen planarer Materialien mittels tesa Power-Strips auf gestrichener Rauhfasertapete bei praxisgerechten Anpreßdrucken (100 N/7,4 cm²) oft nur Verklebungsflächen von ca. 10% bis 40% der haftklebrigen Fläche erreicht. Aber auch bei der Verklebung auf glatten planaren Oberflächen kann eine unzureichende Verklebungsfläche Begründung für eine mangelhafte Verklebungsfestigkeit sein. Ursache ist wohl der Einschluß von Luftblasen in den Verklebungsflächen. Entsprechende Luftblasen sind oft auch durch hohe Anpreßdrucke nicht vollständig zu eliminieren. In zahlreichen Fällen werden Verklebungen, die entsprechende Lufteinschlüsse aufweisen, im Vergleich zu vollflächig und luftblasenfrei verklebten Mustern merklich reduzierte Verklebungsfestigkeiten bedingen.

**US 5,516,581** und **WO 95106691** beanspruchen durch Dehnen im wesentlichen in der Verklebungsebene wiederablösbare Selbstklebebänder, deren Träger polymere Schäume enthalten. Insbesondere beschreibt **WO 95/06691**, daß durch Einsatz von Polymerschäume enthaltende Trägermaterialien, durch Verstrecken wiederablösbare Selbstklebebänder erhältlich sind, die eine deutlich verbesserte Anschmiegsamkeit an rauhe und ungleichmäßige Oberflächen aufweisen. Infolge der hierdurch erreichten höheren Verklebungsfläche lassen sich mit diesen Produkten auch auf rauhen und unregelmäßig geformten Untergründen hohe Verklebungsfestigkeiten realisieren. Die für den Ablöseprozeß notwendige Reißfestigkeit und Dehnung wird in allen Fällen über die eingesetzten Trägermaterialien realisiert.

Entscheidend für die Konformibilität der gewünschten Selbstklebebänder an rauhe und unregelmäßige Oberflächen und damit die erreichbare Verklebungsfestigkeit auf entsprechenden Untergründen sind primär die mechanischen Eigenschaften des Selbstklebebandes senkrecht zur Verklebungsebene (Stauchhärte, Zug-Dehnungsverhalten, Spaltfestigkeit, Oberflächenbeschaffenheit, Druckverformungsrest etc.) sowie die Dicke des Selbstklebebandes, Eigenschaften, die wesentlich durch das Eigenschaftsprofil des verwendeten schaumstoffhaltigen Trägers in eben dieser Vorzugsrichtung und durch dessen Dicke definiert sind. Die mechanischen Eigenschaften in Verstreckungsrichtung, die den Ablöseprozeß wesentlich beeinflussen, sowie solche senkrecht zur Verktebungsebene, die die Anpassungfähigkeit an rauhe und unregelmäßige Untergründe wesentlich bestimmen, können mit den bisher bekannten Klebstofffolien jedoch nicht beliebig unabhängig voneinander gesteuert werden. Für den Ablöseprozeß sind dabei insbesondere niedrige Stripkräfte erwünscht, um einerseits ein leichtes und angenehmes Ablösen zu ermöglichen, andererseits aber auch um ein zerstörungsfreies Ablösen auch von sehr empfindlichen Untergründen, wie z. B. Tapeten, zu erreichen. Ein leichtes Ablösen wird i. a. dann beobachtet, wenn die Selbstklebebänder eine hohe Dehnung bei gleichzeitig möglichst niedriger Streckspannung aufweisen.

Aufgabe der vorliegenden Erfindung war es, die vorgenannten Nachteile zu überwinden, insbesondere Selbstklebebänder zu erhalten, welche:
- durch Verstrecken insbesondere in der Verklebungsebene rückstands- und zerstörungsfrei wiederablösbar sind,
- welche eine gezielte Steuerung der Ablösekräfte (Stripkräfte) durch entsprechende Modifikation der verwendeten Träger zulassen, wodurch
   - eine Vielzahl der im Markt erhältlichen Folienträger erfindungsgemäß nutzbar sind.
   - eine Vielzahl der im Markt erhältlichen schaumstoffhaltigen Materialien nutzbar sind inklusive einer Vielzahl von Schaumstoff-Folien Verbunden,

- die durch die optionale Verwendung schaumstoffhaltiger Träger eine hohe Komformibilität zu rauhen und unregelmäßig geformten Oberflächen aufweisen und damit hohe Verklebungsfestigkeiten auf entsprechenden Untergründen erlauben,
- wobei die verwendeten schaumstoffreien Träger, schaumstoffhaltigen Träger und Schaumstoff-Folien Verbunde zur, zum rückstands- und zerstörungsfreien Ablösen durch Verstrecken im wesentlichen in der Verklebungsebene, benötigten Reißfestigkeit nicht beizutragen brauchen.

Gelöst wird die Aufgabe durch Klebebänder, wie sie näher in den Ansprüchen gekennzeichnet sind, insbesondere
- durch Verstrecken insbesondere in der Verklebungsebene rückstands- und zerstörungsfrei wiederablösbare Klebstofffolien, welche nicht schaumstoffhaltige Träger, schaumstoffhaltige Träger oder Träger auf Basis von Schaumstoff-Folien Verbunden enthalten, wobei
- entsprechende Träger durch eine Schädigung/Vorbehandlung, wie z. B. Zerschneiden, Perforieren oder Stanzen, gezielt modifiziert sind, wodurch
- die zum Verstrecken vorgenannter Träger benötigten Kräfte steuerbar sind und gegenüber den Streckkräften nicht derart vorbehandelter Träger erniedrigt sind, so daß
- resultierende Klebstofffolien, welche vorgenannte Träger nutzen, über verringerte Ablösekräfte und somit ein verbessertes Ablöseverhalten verfügen,
- durch den optionalen Einsatz von schaumstoffhaltigen Trägern bzw. Schaumstoff-Folien Verbunden eine hohe Konformibilität und damit Verklebungsfestigkeit auf rauhen Verklebungsuntergründen erreicht wird.
- Das rückstands- und zerstörungsfreie Wiederablösen erfindungsgemäßer Selbstklebebänder wird durch eine ausreichend hohe Reißfestigkeit und Reißdehnung der in Kombination mit o. g. Trägern genutzten Haftklebemassen erreicht.

Somit betrifft der Anspruch 1 Klebebänder für eine durch Zug rückstandsfrei und beschädigungslos wiederlösbare Verklebung, mit einem Träger, der einseitig oder beidseitig mit einer Selbstklebemasse beschichtet ist, ausgenommen einem reinen Schaumstoffträger, dadurch gekennzeichnet, dass
a) auf mindestens einer der beiden Seiten des Trägers eine Selbstklebemasse vollflächig aufgebracht ist, deren Verhältnis von Reißkraft zu Ablösekraft (Stripkraft) bei einem Abzugswinkel von weniger als 10 ° zur Verklebungsfläche größer als 1,2:1 ist,
b) der Träger durch Vorbehandlung gezielt geschädigt ist, so dass die Ablösekraft (Stripkraft) im Vergleich zu einem analogen Selbstklebeband mit nicht entsprechend geschädigtem Träger erniedrigt ist.

Durch die hier beschriebene Möglichkeit der gezielten Trägervorbehandlung (Schädigung) steht eine sehr große Auswahl von Kunststofffolien, schaumstoffhaltigen Materialien und Schaumstoff-Folien Verbunden für diese Anwendung zur Verfügung. Selbstklebebänder mit breit gefächertem Anwendungsspektrum auf Basis preiswerter Rohstoffe lassen sich hierdurch realisieren. Durch die Art der Vorbehandlung sowie Art und Schichtstärke der verwendeten Haftklebemassen lassen sich insbesondere die Ablösekräfte (Stripkräfte) erfindungsgemäßer Selbstklebebänder in weiten Bereichen steuern. Da die zum Entkleben durch Verstrecken benötigten Ablösekräfte wesentlich durch die zur Verstreckung der Träger nötige Kraft mitbeeinflußt wird, liegen die Ablösekräfte für erfindungsgemäße Selbstklebebänder gegenüber den in US 4,024,312, WO 92/11332, WO 92/11333, US 5,516,581 und WO 95/06691 beschriebenen bei Verwendung identischer Haftklebemassen und Klebmasseaufträge durchweg bei niedrigeren Werten, was einen wesentlichen Vorteil für den Anwender darstellt.

Im Gegensatz zur WO 92/11333, US 5,516,581 und zur WO 95/06691 können erfindungsgemäß sowohl solche Träger eingesetzt werden, welche im nicht vorbehandelten Zustand hochverstreckbar sind (maximale Dehnung > ca. 250%), wobei bei Verstreckung eine im Wesentlichen plastische Deformation als auch eine im Wesentlichen elastische Deformation auftreten kann, als auch solche von im nicht vorbehandelten Zustand geringer Verstreckbarkeit (maximale Dehnung < 250%). Hierdurch kann auf eine wesentlich breitere Basis an Folien, schaumstoffhaltigen Trägern und Schaumstoff-Folien Verbunden zurückgegriffen werden. Vorgenannte Möglichkeit besteht, da die erfindungsgemäß verwendeten Träger durch den Vorbehandlungsprozeß beim Ablösen des Klebebandes durch Verstrecken weitestgehend in einzelne Teile separieren, die Verstreckung der Klebemasse(n) dabei nicht beeinträchtigen und die für den Wiederablöseprozeß benötigte hohe Reißfestigkeit bei gleichzeitig hoher Dehnung nicht vom verwendeten Träger vermittelt wird.

In US 4,024,312, WO 92/11332, WO 92/11333, US 5,516,581 und WO 95/06691 beschriebene Träger müssen zudem über ihre gesamte Lebenszeit die für den Ablöseprozeß durch Strippen nötige hohe Reißfestigkeit und Dehnfähigkeit besitzen. Tritt eine Reduzierung einer der vorgenannten Parameter durch Alterung ein, so ist der rückstandsfreie Ablöseprozeß gefährdet. Gleiches gilt nicht für erfindungsgemäße Klebstofffolien, da hier der rückstandsfreie Wiederablöseprozeß primär durch das Eigenschaftsprofil der verwendeten Haftklebemassen bestimmt wird, nicht jedoch durch die mechanische Festigkeit der genutzten Trägerfolien in der Richtung, in der diese Klebstofffolien durch Verstreckung gelöst werden können.

Bei Verklebung auf rauhen und sehr empfindlichen Haftgründen, wie z. B. gestrichener Rauhfasertapete, zeigt sich, daß erfindungsgemäße Selbstklebebänder, welche einen schaumstoffhaltigen Träger bzw. einen Schaumstoff-Folien Verbund nutzen, infolge der höheren Verklebungsfläche eine wesentlich gleichmäßigere Belastung der Verklebungsuntergründe ermöglichen. Durch Vorbehandlung der Träger mittels Zerschneiden, Perforieren oder Stanzen selbiger, werden die Ablösekräfte im Vgl. zu Klebestreifen, welche die analogen, jedoch nicht entsprechend vorbehandelten Träger nutzen, deutlich vermindert. Hierdurch ergeben sich merklich geringere Zerstörungen der Haftgründe beim Wiederablösen der Klebstofffolien, etwa in Form von Farbausrissen, wobei gleichzeitig eine deutlich höhere Belastbarkeit der Verklebung, im Vergleich zu Klebstofffolien, die keinen schaumstoffhaltigen Träger nutzen, erreicht wird.

### Beispielhafte Anwendungen

Rückstandsfrei und zerstörungsfrei wiederablösbare Selbstklebebänder für:
- Originalverschlußapplikationen, ein und beidseitig haftklebrig.
- die Fixierung von Postern, Bildern, Kalendern, Postkarten, Hinweisschildern, selbstklebenden Haken, auch vorkonfektioniert,
- Etiketten, z. B. Preisauszeichnungsetiketten,
- allgemein zum Verbinden von zu einem späteren Zeitpunkt wieder zu entklebender Materialien.
- Dämpfungselemente, Dämmelemente, Dichtungselemente.

### Einsatzmaterialien

### Haftklebemassen

Als Haftklebemassen finden bevorzugt solche auf Basis von Blockcopolymeren enthaltend Polymerblöcke gebildet von Vinylaromaten (A-Blöcke), bevorzugt Styrol, und solchen gebildet durch Polymerisation von 1,3-Dienen (D-Blöcke), bevorzugt Butadien und Isopren Anwendung. Sowohl Homo- als auch Copolymerblöcke sind erfindungsgemäß nutzbar. Resultierende Blockcopolymere können gleiche oder unterschiedliche D-Blöcke enthalten, die teilweise, selektiv oder vollständig hydriert sein können. Blockcopolymere können lineare A-D-A Struktur aufweisen. Einsetzbar sind ebenfalls Blockcopolymere von radialer Gestalt sowie sternförmige und lineare Multiblockcopolymere. Als weitere Komponenten können A-D Zweiblockcopolymere vorhanden sein. Blockcopolymere können modifiziert sein, z. B. funktionalisiert durch Umsetzung mit Maleinsäureanhydrid. Blockcopolymere von Vinylaromaten und Isobutylen sind ebenfalls erfindungsgemäß einsetzbar. Sämtliche der vorgenannten Polymere können alleine oder im Gemisch miteinander genutzt werden. Typische Einsatzkonzentrationen für die Styrolblockcopolymere liegen im Bereich zwischen 15 Gew.% und 75 Gew.%, bevorzugt im Bereich zwischen 30 Gew.% und 60 Gew.% besonders bevorzugt im Bereich zwischen 35 Gew.% und 55 Gew.%.

Als Klebrigmacher sind u. a. geeignet: Kolophonium und seine Derivate, aliphatische, aromatenmodifizierte aliphatische, aromatische und phenolmodifizierte Klebharze um nur einige zu nennen. Einsatzkonzentrationen der Harze liegen typischerweise im Bereich zwischen 15 Gew.% und 75 Gew.%, bevorzugt im Bereich 30 Gew.% und 65 Gew.%, besonders bevorzugt im Bereich zwischen 35 Gew.% und 60 Gew.%. Bevorzugt eingesetzt werden im Falle der Verwendung von Kolophonium und dessen Derivate Ester von teil- oder vollhydriertem Kolophonium.

Als endblockverträgliche Harze (vornehmlich mit den Vinylaromatenblöcken verträgliche Harze) können Homo- und Copolymere von Vinylaromaten, wie z. B. Styrol oder α-Methylstyrol, Polyphenylenoxide, aber auch phenylenoxidmodifizierte Harze genutzt werden.

Weitere optimale Abmischkomponenten umfassen Weichmacheröle und Flüssigharze (Einsatzkonzentrationen zwischen 0 und max. ca. 35 Gew.%), Füllstoffe (verstärkende und nicht verstärkende), z. B. Siliziumdioxid, insbesondere synthetische Silica, Glas (gemahlen oder in Form von Kugeln), Aluminiumoxide, Zinkoxide, Calciumcarbonate, Titandioxide, Ruße, um nur einige zu nennen, Alterungsschutzmittel (primäre und sekundäre Antioxidantien, Lichtschutzmittel, Antiozonantien, Metalldesaktivatoren etc.). Abmischkomponenten umfassen ebenfalls Polymere, welche insbesondere Auswirkung auf die Ozonbeständigkeit der Blockcopolymere nehmen, wie z. B. Polyvinylacetate und Ethylen-Vinylacetat Copolymere.

Als weitere Polymere können natürliche und synthetische, wie z. B. Naturkautschuk, synthetische Polyisoprene, Polybutadiene, Polychloroprene, SBR, Kraton Liquid (Shell Chemicals), niedermolekulare Styrol-Dien Blockcopolymere, wie z. B. Kraton LVSI 101, Polyisobutylene usw. vorhanden sein, welche die vinylaromatenhaltigen Blockcopolymere bis zu ca. 50 Gew.% ersetzen können.

Erfindungsgemäße Haftklebemassen können chemisch, insbesondere strahlenchemisch (z. B. durch UV-Bestrahlung, γ-Bestrahlung oder durch Bestrahlung mittels schneller Elektronen) vernetzt sein.

Erfindungsgemäße Klebmassen sind optional solche, deren Haftklebrigkeit erst durch thermische oder Lösemittelaktivierung erzeugt wird.

Geeignete Haftklebemassen sind neben den zuvor beschriebenen auf Basis vinylaromatenhaltiger Blockcopolymere all solche, welche über eine für den Ablöseprozeß ausreichende Reißfestigkeit, Kohäsion und Dehnung verfügen. Entsprechende Haftklebemassen können allein oder in Kombination mit solchen auf Basis vinylaromatenhaltiger Blockcopolymere eingesetzt werden. Erfindungsgemäß geeignet sind z. B. haftklebrige Acrylatcopolymere, welche als Comonomere Makromonomere enthalten, wobei die Makromonomere eine Glastemperatur von > +40°C aufweisen. Die hohe Reißfestigkeit entsprechender Copolymere wird wahrscheinlich durch die Assoziation der Makromonomere erreicht. Geeignete Makromonomere sind z. B. methacryloylterminierte Polymethylmethacrylate oder methacryloylterminierte Polystyrole.

### Nicht schaumstoffhaltige Träger

Geeignete Kunststofffolien umfassen sowohl solche, welche im nicht vorbehandelten Zustand eine hohe elastische oder plastische Deformation (Reißdehnungen typischerweise > ca. 250 %) erlauben als auch solche, die im nicht vorbehandelten Zustand nur eine geringe plastische oder elastische Defomation zulassen (Reißdehnungen typischerweise < 250 %). Foliendicken betragen typischerweise ca. 10 µm bis 500 µm, bevorzugt 15 µm bis 300 µm, besonders bevorzugt 20 µm bis 150 µm. Als Kunststofffolien können u. a. solche auf Basis von Polyolefinen, bevorzugt Polyethylen oder Polypropylen, solche auf Basis von Polystyrol oder Styrolcopolymeren, Polyestern, Polyamiden, Polyvinylchlorid, Polyurethanen und thermoplastischen Styrolblockcopolymeren, eingesetzt werden. Folien können im wesentlichen unverstreckt aber z. B. auch mono- oder biaxial verstreckt zum Einsatz kommen. Folien können von ein- als auch von mehrschichtiger Natur sein.

### Schaumstoffhaltige Träger

Erfindungsgemäße schaumstoffhaltige Träger (Schaumstoffträger) basieren insbesondere auf Homo- und Copolymeren des Ethylens, insbesondere werden Polyethylene niederer und sehr niederer Dichte (LDPE, LLDPE, VLDPE), Ethylen-Vinylacetat Copolymere, sowie Gemische vorgenannter Polymere genutzt. Weitere Polymere können u. a. sein: Polyvinylacetate, Polypropylene, Polystyrole, Styrolcopolymere, EPDM, thermoplastische Elastomere auf Basis von Styrolblockcopolymeren, Polyurethane auf Basis aromatischer und aliphatischer Diisocyanate, PVC, Polychloroprene, Naturkautschuk, Acrylatcopolymere. Die schaumstoffhaltigen Träger können vernetzt oder unvernetzt zum Einsatz kommen. Einsetzbar sind sowohl weitestgehend elastisch verformende als auch weitestgehend plastisch verformende Schaumstoffe. Erfindungsgemäß nutzbar sind ebenfalls Gemische vorgenannter Materialien sowie Abmischungen mit weiteren Komponenten, wie z. B. Naturkautschuk-Harz Gemische oder Synthesekautschuk-Harz Gemische.

Die Dicken der eingesetzten schaumstoffhaltigen Träger liegen insbesondere zwischen 150 µm und 30 mm, bevorzugt zwischen 200 µm und 7 mm. Raumdichten betragen 20 bis 600 kg/m³, bevorzugt 30 bis 300 kg/m³. Die Schaumstruktur kann geschlossenzellig, offenzellig oder gemischtzellig sein. Genutzt werden können verhautete oder nicht verhautete Schaumstoffe. Erfindungsgemäß einsetzbar sind ebenfalls mehrschichtige Produktaufbauten bestehend aus geschäumten Schichten und nicht geschäumten Schichten. So sind Schaumstoff-Folien Coextrudate erfindungsgemäß einsetzbar, wobei geschäumte Schichten und nicht geschäumte coextrudierte Schichten aus gleichen oder unterschiedlichen Materialien bestehen können. Desweiteren sind Laminate mehrerer schaumstoffhaltiger Träger sowie Verbunde schaumstoffhaltiger Träger mit Kunststofffolien erfindungsgemäß einsetzbar. Schaumstoffhaltige Träger, welche Schaumstoff-Kunststofffolienverbunde enthalten, können derart aufgebaut sein, daß die Schaumstoffschicht ein- oder beidseitig mit einer Kunststofffolienschicht versehen ist. Besteht der schaumstoffhaltige Träger aus mehreren schaumstoffhaltigen Schichten, so kann jede Schicht optional ein- oder beidseitig mit einer Kunststofffolie verbunden sein. Eine ausreichende Verbundfestigkeit zwischen Kunststofffolie(n) und Schaumstoffschicht(en) kann u. a. durch Coextrusion, Flamm- oder Heißkaschierung, Verwendung von Kaschierklebstoffen, Nutzung von Siegelschichten, mittels Primerung, Druckvorbehandlung (z. B. mittels Corona- oder Plasmaentladung, mittels Plasmadeposition, Gas- oder Flüssigfluorierung, etc.) etc. realisiert sein. Kaschierklebstoffe können in Form ihrer wässrigen Dispersionen, als Lösung in organischen Lösemitteln oder als Schmelzkleb- oder Schmelzhaftklebstoff eingesetzt werden.

Geeignete Kunststofffolien für Schaumstoff-Kunststofffolien Verbunde umfassen sowohl solche, welche im nicht vorbehandelten Zustand eine hohe elastische oder plastische Deformation (Reißdehnungen typischerweise > ca. 250 %) erlauben als auch solche, die im nicht vorbehandelten Zustand nur eine geringe plastische oder elastische Defomation zulassen (Reißdehnungen typischerweise < 250 %). Foliendicken sowie die Dicken nicht geschäumter Coextrusionsschichten betragen typischerweise ca. 5 µm bis 300µm, bevorzugt 10 µm bis 200 µm, besonders bevorzugt 15 µm bis 100 µm. Als Kunststofffolien können u.a. solche auf Basis von Polyolefinen, bevorzugt Polyethylen oder Polypropylen, solche auf Basis von Polystyrol oder Styrolcopolymeren, Polyestern, Polyamiden, Polyvinylchlorid, Polyurethanen und thermoplastischen Styrolblockcopolymeren oder Gemische vorgenannter Polymere, eingesetzt werden. Folien können im wesentlichen unverstreckt aber z. B. auch mono- oder biaxial verstreckt zum Einsatz kommen. Prinzipiell verwendbar sind ebenfalls Vliese auf Kunststoff- und Cellulosebasis, Papiere und Gewebe.

### Vorbehandlung der Träger

Zur Einstellung der Ablösekräfte werden die nicht schaumstoffhaltigen Träger, die schaumstoffhaltigen Träger bzw. Schaumstoff-Folien Verbunde erfindungsgemäßer Selbstklebebänder einer Vorbehandlung / Schädigung durch z. B. Perforieren, Zerschneiden oder Stanzen unterzogen. Entsprechende Vorbehandlung kann vor oder nach der ersten Beschichtung mit Haftklebemasse durchgeführt werden. Ergebnis der Vorbehandlung sind insbesondere Einschnitte im Träger oder Herauslösungen von Material aus dem Träger, welche die mechanische Festigkeit des Trägers in der Richtung reduzieren, in der später die unter Verwendung selbiger Träger erzeugten Selbstklebebänder, durch Verstrecken im wesentlichen in der Verklebungsebene, gelöst werden sollen.

Beispiele für entsprechende Vorbehandlungen sind: Schnitte, Stanzungen und Perforationen. Diese können die Gesamtfläche der Träger bedecken oder auch in begrenzten Bereichen vorliegen. Sie können eine regelmäßige Struktur bzw. Wiederholfolge oder unregelmäßig vorliegen. Besteht der Träger aus mehreren Schichten bzw. Komponenten, so können diese einzeln oder selektiv vorbehandelt sein. So kann z. B. bei einem Laminat bestehend aus einer geschäumten Schicht und einer Folienschicht ausschließlich die Folie durch Schnitte, Stanzungen oder Perforationen vorbehandelt sein. Aus mehreren Schichten bestehende schaumstoffhaltige Zwischenträger bei denen die nicht vorbehandelte geschäumte Schicht beim Ablöseprozeß typischerweise zerreißt, können selektiv ausschließlich in den beim Ablöseprozeß ohne Vorbehandlung typischerweise nicht zerreißenden Schichten vorbehandelt sein.

Unterschieden werden können Vorbehandlungen, bei denen die ursprüngliche Form der Trägermaterialien erhalten bleibt und solche, bei denen durch Stoffentnahme (z. B. Herausstanzen) oder durch thermische Behandlung (z. B. Aufschmelzen) materialfreie Bereiche etwa in Form von lochartigen oder kanalartigen Öffnungen im Träger erzeugt werden. Einschnitte sowie materialfreie Bereiche können lediglich teilweise oder auch vollständig den Träger durchdringen oder auch in gemischter Form vorliegen. Sie können einseitig oder beidseitig in den Träger eingebracht sein.

Zuvor genannte materialfreie Bereiche können im Herstellprozeß derart genutzt werden, daß sie im Endprodukt mit Haftklebemasse gefüllt sind, so daß bei doppelseitig mit Haftklebemasse beschichteten Klebstofffolien und den Träger durchdringende materialfreie Bereiche eine kontinuierliche Verbindung der beiden Haftkleberschichten vorliegt. Durch den so erhaltenen Formschluß wird u. a. die Integrität entsprechender Klebstofffolien beim Ablöseprozeß verbessert

### Verankerung der Haftklebemassen auf den Trägern

Zur Erzeugung einer ausreichenden Verankerung der eingesetzten Haftklebemassen auf den Trägern werden diese vorteilhaft bei deren Herstellung und / oder vor deren Beschichtung einer Druckvorbehandlung unterzogen. Geeignete Vorbehandlungsverfahren sind u. a. die Fluorvorbehandlung, die Coronavorbehandlung, die Plasmabehandlung und die Flammvorbehandlung, letztere insbesondere mittels elektrisch polarisierter Flamme. Vorbehandlungsmethoden können alleine oder in Kombination angewandt werden. Bei Folienträgern, verhauteten Schäumen, bei Integralschäumen und im Falle der Verwendung von Schaumstoff-Kunststofffolienlaminaten kann zur weiteren Verbesserung der Klebmasseverankerung eine Primerung des schaumstoffhaltigen Trägers durchgeführt werden.

Offenzellige und gemischtzellige Schäume können einer Imprägnierung unterzogen sein. Zwischen schaumstoffhaltigem Träger und Haftklebemassen kann optional eine Sperrschicht integriert sein, um die Wanderung migrationsfähiger Materialien zwischen Haftklebemassen und Träger zu reduzieren.

### Selbstklebebänder

Erfindungsgemäße Selbstklebebänder enthalten wenigstens einen Träger, welcher vollflächig einseitig oder beidseitig mit einer Haftklebemasse ausgerüstet ist. Die Klebmasse verfügt über eine ausreichende Reißdehnung und Reißfestigkeit, so daß entsprechende Selbstklebebänder durch Verstrecken insbesondere in der Verklebungsebene rückstands- und zerstörungsfrei von den Verklebungsuntergründen wiederabgelöst werden können. Haftklebemassen können von gleicher oder unterschiedlicher Rezeptur sein sowie mit gleichem oder unterschiedlichem Masseauftrag auf beide Klebebandseiten aufgetragen sein. Klebmassen können aus einer oder aus mehreren Klebmasseschichten aufgebaut sein. Z. B. kann eine Klebstoffschicht aus zwei Lagen bestehen, welche beide vinylaromatenhaltige Blockcopolymere als Polymerbasis nutzen, wobei die Blockcopolymere von gleicher oder unterschiedlicher Art sind. Auch kann auf eine erste Klebstoffschicht enthaltend vinylaromatenhaltige Blockcopolymere eine solche auf Basis weiterer Kautschuke, wie z. B Naturkautschuk oder Polybutadien oder Polyisobutylen oder "Kraton Liquid" (Shell Chemicals) oder Gemische vorgenannter Polymere aufgebracht sein.

Selbstklebebänder sind dadurch gekennzeichnet, daß ihre Reißdehnungen insbesondere größer als 200%, bevorzugt größer als 350%, besonders bevorzugt größer als 450% betragen.

Reißfestigkeiten der verwendeten Haftklebemassen liegen bei größer 1.5 MPa, bevorzugt bei größer 3 MPa, besonders bevorzugt bei größer 5 MPa.

Schichtstärken der die Reißfestigkeit bestimmenden Haftklebemassen betragen insbesondere ≥ ca. 60µm, bevorzugt ≥ 100µm, besonders bevorzugt ≥160µm.

Das Verhältnis von Reißkraft zu Stripkraft der Selbstklebebänder ist bei Abzugswinkeln von < 10° gegen die Verklebungsfläche größer als 1,2 : 1, bevorzugt größer als 1,5 : 1, besonders bevorzugt größer als 2 : 1.

### Konfektionierform

Konfektionierformen erfindungsgemäßer Klebebänder umfassen sowohl Klebebandrollen als auch Klebebandstücke definierter Abmessungen, z. B. in Form von Stanzlingen. Klebebandstücke definierter Abmessungen können wahlweise entsprechend DE 4.428.587 ein ausgeformtes Ende, - z. B. ein spitz zulaufendes Ende - aufweisen, oder entsprechend DE 4.431.914 mit trennlackierter Anfasserfolie oder trennlackiertem Trennpapier ausgerüstet sein. Ebenfalls möglich ist die Erzeugung eines Anfasserbereiches durch Inertisierung der Haftklebstoffoberfläche, z. B. mit Hilfe eines nicht haftklebrigen Lackes oder durch Bepuderung mit einem nicht haftklebrigen Material.

### Herstellung

Erfindungsgemäße Klebstofffolien werden durch Beschichtung der beschriebenen Kunststofffolien, schaumstoffhaltigen Träger bzw. der Schaumstoff-Folien Verbunde mit den gewünschten Klebstoffen erhalten. Klebstoffe können in Form ihrer Lösungen in einem organischem Lösemittel, in Form ihrer wässrigen Dispersionen oder als 100%-Systeme beschichtet werden. Bevorzugt eingesetzt werden Schmelzhaftklebstoffe, welche direkt oder durch Kalt- oder Heißlaminierung auf den Träger aufgebracht werden.

Die Bearbeitung der Kunststofffolien, schaumstoffhaltigen Träger bzw. Schaumstoff-Folien Verbunde durch z. B. Perforieren, Zerschneiden oder Stanzen kann mittels der üblichen, dem Fachmann bekannten Verfahren, z. B. mechanisch mittels Klingenschnitt, durch Verwendung einer Rotationsstanze, durch Nutzung von Perforationsmessern oder thermisch durch z. B. Laserperforation vorgenommen werden. Entsprechende Bearbeitung kann sowohl am nicht mit Klebemasse beschichteten Träger als auch am einseitig mittels Haftklebemasse beschichteten Material durchgeführt werden.

### Prüfmethoden

### Kippscherfestigkeit

Zur Bestimmung der Kippscherfestigkeit wird die zu prüfende Klebstoff-Folie der Abmessung 20 mm * 50 mm, welche an einem Ende beidseitig mit einem nicht haftklebrigen Anfasserbereich versehen ist (erhalten durch Aufkaschieren von 25 µm starker biaxial verstreckter Polyesterfolie der Abmessungen 20 mm * 13 mm (Hostaphan RN 25)), mittig auf eine hochglanzpolierte quadratische Stahlplatte der Abmessung 40 mm * 40 mm *3 mm (Länge * Breite * Dicke) verklebt. Die Stahlplatte ist rückseitig mittig mit einem 10 cm langen Stahlstift versehen, welcher vertikal auf der Plattenfläche sitzt. Die erhaltenen Probekörper werden mit einer Kraft von 100 N auf den zu prüfenden Haftgrund verklebt (Andruckzeit = 5 sec) und 5 min im unbelasteten Zustand belassen. Nach Beaufschlagung der gewählten Kippscherbelastung durch Anhängen eines Gewichtes (Hebelarm und Masse des Gewichtes wählbar) wird die Zeit bis zum Versagen der Verklebung ermittelt.

### Ablösekraft (Stripkraft)

Zur Ermittlung der Ablösekraft (Stripkraft) wird eine Klebstoff-Folie der Abmessungen 50 mm * 20 mm (Länge * Breite), mit am oberen Ende nicht haftklebrigem Anfasserbereich (s. o.), zwischen zwei Stahlplatten (deckungsgenau zueinander angeordnet) der Abmessungen 50 mm x 30 mm, entsprechend dem unter "Kippscherfestigkeit" beschriebenen Vorgehen, jedoch mit Anpreßdrucken von jeweils 500 N, verklebt. Die Stahlplatten tragen an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden 24 h bei +40°C gelagert. Nach Rekonditionierung auf RT wird der Klebfolienstreifen mit einer Zuggeschwindigkeit von 1000 mm/min parallel zur Verklebungsebene herausgelöst. Dabei wird die erforderliche Ablösekraft (Stripkraft) in N/cm gemessen. Die Stahlplatten werden abschließend auf vorhandene Klebmasserückstände überprüft.

### Verklebungsfläche auf Glas

Klebfolienstreifen der Abmessungen 20 mm x 50 mm werden mittig auf einen planaren Stahluntergrund der Abmessungen 200 mm x 100 mm verklebt. Der so hergestellte Verbund wird vertikal, deckungsgleich auf eine Glasplatte gleicher Abmessung verklebt und mit 100 N gleichmäßig mittig angedrückt. Die Andruckzeit beträgt 5 sec. Es erfolgt eine Dreifachbestimmung. Die erhaltene Verklebungsfläche auf der Glasoberfläche wird visuell ermittelt und in Prozent der Klebstofffolienoberfläche angegeben.

### Verklebungsfläche auf Rauhfasertapete

Zur Ermittlung der Verklebungsfläche auf rauhen Untergründen werden Klebfolienstreifen der Abmessungen 20 mm x 50 mm mittig auf einen planaren Stahluntergrund der Abmessungen 200 mm x 100 mm verklebt. Der so hergestellte Verbund wird vertikal, deckungsgleich auf eine gestrichene Rauhfasertapete (Tapete: Erfurt Körnung 52; Farbe: Herbol Zenit LG; Tapete verklebt auf Preßspanplatte) gleicher Abmessung, die dünn mit Alubronce bepudert wurde, aufgelegt und mit 100 N gleichmäßig mittig angedrückt. Die Andruckzeit beträgt 5 sec. Es erfolgt eine Dreifachbestimmung. Muster lassen sich leicht vertikal von der bepuderten Rauhfasertapete abheben. Die erhaltene Verklebungsfläche wird visuell über die auf die Klebfolienoberfläche übertragenen Alubronze ermittelt und in Prozent der Klebstofffolienoberfläche angegeben.

### Prüfung auf rückstandsfreies und zerstörungsfreies Wiederablösen

Eine entsprechende Prüfung wird im Rahmen der Bestimmung der Ablösekraft (Stripkraft) (s. o.) für die Untergründe Stahl // Stahl durchgeführt. Zur Prüfung der rückstandsfreien und zerstörungsfreien Wiederablösbarkeit auch auf anderen Untergründen, z. B. PMMA // gestrichene Rauhfasertapete (Tapete: Erfurt Körnung 52; Farbe: Herbol Zenit LG; Tapete verklebt auf Preßspanptatte), werden entsprechende Prüfkörper, wie oben unter "Ablösekraft (Stripkraft)" beschrieben, erstellt und die Verklebung entweder maschinell oder manuell gelöst (gestrippt). Bewertet wird, ob Klebmasserückstände auf den Verklebungsuntergründen vorhanden sind respektive ob Zerstörungen der Verklebungsuntergründe detektiert werden können.

### Beispiele

### Beispiele 1 bis 13

Alveolit TA 0501.5 und Alveolit TE 0500.8 (Alveo AG) werden in Bahnlängsrichtung einer Perforationsstanzung unterzogen, wodurch im Querabstand von 2 mm 8 mm lange, den ganzen schaumstoffhaltigen Träger durchdringende Einschnitte erzeugt werden, die durch 3 mm lange nicht durchstanzte Bereiche unterbrochen sind. Benachbarte Stanzschnitte sind um 5,5 mm gegeneinander verschoben, so daß jeweils übemächste Stanzschnitte deckungsgleich zueinander liegen. Auf entsprechende Schaumstoffe wird beidseitig eine Haftklebemasse bestehend aus 20 Tln. SBS Blockcopolymer (Vector 8508, Exxon), 80 Tln. SIS Blockcopolymer (Vector 4211, Exxon), 100 Tln. eines Pentaesters von teilhydriertem Kolophonium (Foralyn 110, Hercules) und 1 TI. eines primären Antioxidantes (Irganox 1010, Ciba Geigy) [= Rezeptur 1] durch Kaltlamination aufgebracht. Hierzu wird der perforierte Schaumstoff auf den auf silikonisiertem Trennpapier vorliegenden Haftklebstoff (Breite von Schaumstoff und Haftklebstoff jeweils 50 mm) aufgelegt, danach mit einer gummibeschichteten Stahlwalze von 250 mm Breite bei einem Anpreßdruck von 50 N fünf mal überrollt. Das so erhaltene Zwischenprodukt wird in identischer Weise auf der zweiten Seite mit Haftklebstoff beschichtet.

In analoger Weise werden nachfolgend gelistete Schaumstoff-Kunststofffolien Verbunde zu Klebstofffolien verarbeitet:

| **If. #** | **Handelsname Schaumstoff** | **Handelsname Folie** | **Foliendicke** | **Folienhersteller** |
|---|---|---|---|---|
| **FV-1** | Alveolit TE 0500.8 | Trespaphan FND 30 | 30µm | Hoechst |
| **FV-2** | Alveolit TE 0500.8 | 40 MB 250 | 40µm | Mobil Plastics |
| **FV-3** | Alveolit TE 0500.8 | Hostaphan RN 25 | 25µm | Hoechst |
| **FV-4** | Alveolit TE 0500.8 | Plastotrans LDPE | 60µm | 4P-Forchheim |

| **If. #** | **Kaschierklebstoff // Klebmasseauftrag** | **Folie ein- // beidseitig auf Schaum kaschiert** | **Gesamtdicke Träger ca**. |
|---|---|---|---|
| **FV-1** | Rezeptur 2 // 40 g/m² | beidseitig | 950 µm |
| **FV-2** | Rezeptur 2 // 40 g/m² | einseitig | 890 µm |
| **FV-3** | Rezeptur 2//40 g/m² | beidseitig | 930 µm |
| **FV-4** | Rezeptur 2 // 40 g/m² | einseitig | 880 µm |

O. g. Kunststofffolien werden in einem ersten Fertigungsschritt einseitig mit ca. 40 g/m² eines Schmelzklebstoffes bestehend aus 50 Tln. Vector 4461 (Dexco), 50 Tln. Foralyn 110 (Hercules) und 1 Tl. Irganox 1010 (Ciba) [= Rezeptur 2] beschichtet, danach an einem Heißwalzenlaminator (Walzendurchmesser: 60 mm) in einer Breite von 100 mm bei Walzentemperaturen von +80°C und einer Andruckkraft von 200 N auf Alveolit TA 0501.5 und Alveolit TE 0500.8 ein- bzw. beidseitig aufkaschiert (Walzengeschwindigkeit = 400 mm/min). So dargestellte Muster werden nachfolgend analog dem oben beschriebenen Vorgehen zuerst einer Perforationsstanzung unterzogen, danach zu beidseitig haftklebrigen Klebstofffolien weiterverarbeitet.

Prüfungen werden nach 24-stündiger Konditionierung der so erhaltenen Muster im Klimaraum (50 ± 5 % rel. Feuchte, T = RT = 23 ± 1°C) durchgeführt. Prüfkörper (Klebstofffolien) sind in allen Fällen (mit ihrer längeren Seite) quer zur Perforationsrichtung des verwendeten schaumstoffhaltigen Trägers herausgestanzt.

Zum Vergleich werden die nicht mit einem schaumstoffhaltigen Zwischenträger versehenen Klebstofffolien untersucht. Es ergeben sich nachfolgende Eigenschaften:

| **Bspl. #** | **Musterbezeichnung** | **Schaumstoff bzw. Schaumstoff-Folien Verbund** | **Schaumstoff Art** | **Hersteller** |
|---|---|---|---|---|
| **1** | 3.014 | Alveolit TA 0501.5 | PE vernetzt | Alveo AG |
| **2** | 3.014A | Alveolit TA 0501.5 | PE vernetzt | Alveo AG |
| **3** | 3.017 | Alveolit TE 0500.8 | EVAc vernetzt | Alveo AG |
| **4** | 3.017A | Alveolit TE 0500.8 | EVAC vernetzt | Alveo AG |
| **5** | 3.017-981 | Alveolit TE 0500.8 // Trespaphan FND 30 | **= FV-1** | - |
| **6** | 3.017-982 | Alveolit TE 0500.8 // Trespaphan FND 30 | **= FV-1** | - |
| **7** | 3.017-983 | Alveolit TE 0500.8 // 40 MB 250 | **= FV-2** | - |
| **8** | 3.017-984 | Alveolit TE 0500.8 *ll* Hostaphan RN 25 | **= FV-3** | - |
| **9** | 3.017-985 | Alveolit TE 0500.8 // Hostaphan RN 25 | **= FV-3** | - |
| **10** | 3.017-986 | Alveolit TE 0500.8 *ll* Plastotrans LDPE | **= FV-4** | - |
| **11** | 3.000A | - | - | - |
| **12** | 3.000B | - | - | - |
| **13** | 3.000.988 | schaumstofffreier Träger Hostaphan RN 25 | - | - |

| **Bspl. #** | **Musterbezeichnung** | **Trägerdicke in µm** | **Raumgewicht Schaumstoff in kg/m**^{**3**} | **Klebmasseauftrag Selten A // B** | **Haftklebmasse-rezeptur** |
|---|---|---|---|---|---|
| **1** | 3.014 | 1500 | 200 | 200 // 200 g/m² | [1] |
| **2** | 3.014A | 1500 | 200 | 200 // 200 g/m² | [1] |
| **3** | 3.017 | 800 | 200 | 200 // 200 g/m² | [1] |
| **4** | 3.017A | 800 | 200 | 200 // 200 g/m² | [1] |
| **5** | 3.017-981 | 950 | 200¹ | 210 *ll* 210 g/m² | [1] |
| **6** | 3.017-982 | 950 | 200¹ | 210//210 g/m² | [1] |
| **7** | 3.017-983 | 890 | 200¹ | 210//210 g/m² | [1] |
| **8** | 3.017-984 | 930 | 200¹ | 210//210 g/m² | [1] |
| **9** | 3.017-985 | 930 | 200¹ | 210//210 g/m² | [1] |
| **10** | 3.017-986 | 880 | 200¹ | 210//210 g/m² | [1] |
| **11** | 3.000A | - | - | 360 g/m² | [1] |
| **12** | 3.000B | - | - | 650 g/m² | [1] |
| **13** | 3.000-988 | 25 | - | 210//210 g/m² | [1] |

| | | | | | |
|---|---|---|---|---|---|
| ¹ Dichte Alveolit TE 0500.8 | | | | | |

| **Bspl. #** | **Musterbezeichnung** | **Stripkraft** | **Verklebungsfläche in % auf Rauhfaser // auf Glas** | | **Kippscherfestigkeit***** |
|---|---|---|---|---|---|
| **1** | 3.014 | 20-30 N/cm | ca 80 % | > 95 % | 30 Tage |
| **2** | 3.014A | 8,7 N/cm | ca 80 % | > 95 % | 33 Tage |
| **3** | 3.017 | 26 N/cm | ca 80 % | > 95 % | 28 Tage |
| **4** | 3.017A | 14 N/cm | ca 80 % | > 95 % | 26 Tage |
| **5** | 3.017-981 | 16 N/cm | ca 80 % | > 95 % | 53 Tage |
| **6** | 3.017-982 | nicht stripfähig, da Träger nicht perforiert | | | |
| **7** | 3.017-983 | 15 N/cm | ca 80 %² | > 95 % | 43 Tage |
| **8** | 3.017-984 | 16 N/cm | ca 80 % | > 95 % | 56 Tage |
| **9** | 3.017-985 | nicht stripfähig, da Träger nicht perforiert | | | |
| **10** | 3.017-986 | 18 N/cm | ca 80 %² | > 95 % | 47 Tage |
| **11** | 3.000A | 8 N/cm | ca 30 % | 40-50%**** | 4 - 6 Tage |
| **12** | 3.000B | 11 N/cm | ca 40 % | 60-70 %**** | 8 -12 Tage***** |
| **13** | 3.000-988 | 9, 3 N/cm | ca 30 % | 40-50 %**** | |

| | | | | | |
|---|---|---|---|---|---|
| ² nicht mit Folie kaschierte Schaumstoffseite der Rauhfasertapete zugewandt | | | | | |

| **Bspl. #** | **Musterbezeichnung** | **Schaumstoff bzw. Schaumstoff-Folien Verbund zerreißt beim Ablösen ?** | **Klebstoff-Folie rückstands- und zerstörungsfrei stripbar*** | **Schaum perforiert ?** |
|---|---|---|---|---|
| **1** | 3.014 | ja | ja | nein |
| **2** | 3.014A | ** | ja | ja** |
| **3** | 3.017 | nein | ja | nein |
| **4** | 3.017A | ** | ja | ja** |
| **5** | 3.017-981 | ** | ja | ja** |
| **6** | 3.017-982 | nein | nein | nein |
| **7** | 3.017-983 | ** | ja | ja** |
| **8** | 3.017-984 | ** | ja | ja** |
| **9** | 3.017-985 | nein | nein | nein |
| **10** | 3.017-986 | ** | ja | ja** |
| **11** | 3.000A | - | ja | - |
| **12** | 3.000B | - | ja | - |
| **13** | 3.000-988 | **(schaumstofffreier Träger) | ja | ja** (schaumstoffreier Träger) |

| | | | | |
|---|---|---|---|---|
| * Verklebungsuntergründe = Stahl // Stahl und gestrichene Rauhfaser // PMMA ** Schaumstoffhaltiger Träger perforiert entsprechend obiger Beschreibung; Schaumstoffhaltiger Träger verformt sich irreversibel beim Verstrecken. *** Hebelarm = 50 mm; Scherlast = 5 N; Haftgrund = gestrichene Rauhfasertapete **** großflächige Lufteinschlüsse ***** Rauhfasertapete spaltet im verklebten Bereich | | | | |

Durch die vorgenommene Vorbehandlung der schaumstoffhaltigen Träger wird in allen Fällen eine deutliche Reduzierung der Ablösekräfte (Stripkräfte) erreicht.

Das rückstands- und zerstörungsfreie Ablöseverhalten wird hierdurch nicht beeiträchtigt. Gleichfalls wirkt sich die vorgenommene Perforation nicht auf die erreichbare Verklebungsfläche sowie die erreichbaren Verklebungsfestigkeiten aus. In allen Fällen werden im Vergleich zu den Klebstofffolien, die keinen schaumstoffhaltigen Träger nutzen, wesentlich höhere Verklebungsflächen und Verklebungsfestigkeiten ermittelt.

Durch die Perforationsstanzung lassen sich gleichfalls Schaumstoff-Folien Verbunde und schaumstofffreie Träger nutzen, welche im nicht perforierten Zustand durch die geringe Verstreckbarkeit bzw. nötige hohe Verstreckungskraft der verwendeten Folie für stripfähige Selbstklebebänder nicht einsetzbar sind.

## Patentansprüche

1. Klebeband für eine durch Zug rückstandsfrei und beschädigungslos wiederlösbare Verklebung, mit einem Träger, der einseitig oder beidseitig mit einer Selbstklebemasse beschichtet ist, ausgenommen einem reinen Schaumstoffträger, **dadurch gekennzeichnet, dass**
a) auf mindestens einer der beiden Seiten des Trägers eine Selbstklebemasse vollflächig aufgebracht ist, deren Verhältnis von Reißkraft zu Ablösekraft (Stripkraft) bei einem Abzugswinkel von weniger als 10° zur Verklebungsfläche größer als 1,2:1 ist,
b) der Träger durch Vorbehandlung gezielt geschädigt ist, so dass die Ablösekraft (Stripkraft) im Vergleich zu einem analogen Selbstklebeband mit nicht entsprechend geschädigtem Träger erniedrigt ist.

2. Klebeband nach Anspruch 1, **dadurch gekennzeichnet, dass** der Träger wenigstens eine ungeschäumte Schicht, vorzugsweise einen Folienträger, aufweist.

3. Klebeband nach einem der vorangehenden Ansprüche, **dadurch gekennzeichnet, dass**
der Träger einen mehrschichtigen Aufbau hat.

4. Klebeband nach Anspruch 3, **dadurch gekennzeichnet, dass** wenigstens eine Schicht des mehrschichtigen Trägers geschäumt ist.

5. Klebeband nach einem der vorangehenden Ansprüche, **dadurch gekennzeichnet, dass**
die Selbstklebemasse eine solche auf Basis von Blockpolymeren insbesondere enthaltend Vinylaromatenblöcke ist.

6. Klebeband nach Anspruch 4, **dadurch gekennzeichnet, dass** die Selbstklebemasse eine solche auf Basis von Blockcopolymeren enthaltend Polymerblöcke aus Vinylaromaten (A-Blöcke) und solchen gebildet durch Polymerisation von 1,3-Dienen (D-Blöcke) ist.

7. Klebeband nach Anspruch 6 oder 6, **dadurch gekennzeichnet, dass** die Selbstklebemasse Klebrigmacher und gegebenenfalls weitere Abmischkomponenten und/oder Zusätze enthält.

8. Klebeband nach einem der vorangehenden Ansprüche, **dadurch gekennzeichnet, dass** die Schädigung des Trägers durch Schnitte, Teilschnitte, Perforieren oder Stanzen erfolgt ist.

9. Klebeband nach Anspruch 8, **dadurch gekennzeichnet, dass** die Schädigungen den Träger teilweise oder vollständig durchdringen.

10. Klebeband nach einem der vorangehenden Ansprüche, **dadurch gekennzeichnet, dass** das Klebeband aus dem mit Selbstklebemasse beschichteten Träger an einem Ende einen nicht-klebenden Anfasser aufweist, wobei das andere Ende vorzugsweise eine zum Ende hin abnehmende Klebfläche aufweist.

11. Klebeband nach Anspruch 10, **dadurch gekennzeichnet, dass** der Anfasser durch aufkaschierte Folienabschnitte gebildet wird, deren mit der Selbstklebemasse sich berührende Seiten anti-adhäsiv ausgerüstet sind.

12. Verwendung eines Abschnitts eines Klebebands nach einem der vorangehenden Ansprüche, **dadurch gekennzeichnet, dass** man den beidseits mit Selbstklebemasse beschichteten Abschnitt vorkonfektioniert auf einem Haken, einer Basisplatte oder einem aufzuhängenden Gegenstand verwendet.

## Claims

1. Adhesive tape for a bond which can be redetached without residue or damage by pulling, having a backing coated on one or both sides with a self-adhesive composition, with the exception of a foam backing, **characterized in that**
a) a self-adhesive composition whose ratio of tensile strength to detachment force (stripping force) at a peel angle of less than 10° to the bond surface is greater than 1.2: 1 is applied to at least one of the two sides of the backing over the entire surface,
b) the backing has been subjected to controlled damaging by pretreatment in such a way that the detachment force (stripping force) is lower than that of a similar self-adhesive tape with a backing which has not been so damaged.

2. Adhesive tape according to Claim 1, **characterized in that** the backing has at least one unfoamed layer, preferably a film backing.

3. Adhesive tape according to either of the preceding claims, **characterized in that** the backing has a multilayer structure.

4. Adhesive tape according to Claim 3, **characterized in that** at least one layer of the multilayer backing is a foamed layer.

5. Adhesive tape according to one of the preceding claims, **characterized in that** the self-adhesive composition is based on block copolymers, especially those comprising vinylaromatic blocks.

6. Adhesive tape according to Claim 4, **characterized in that** the self-adhesive composition is based on block copolymers comprising polymer blocks of vinylaromatic compounds (A blocks) and blocks formed by polymerization of 1,3-dienes (D blocks).

7. Adhesive tape according to Claim 6, **characterized in that** the self-adhesive composition comprises tackifiers and, if desired, comprises further blend components and/or additions.

8. Adhesive tape according to one of the preceding claims, **characterized in that** the damaging of the backing is carried out by means of full cuts, partial cuts, perforation or punching.

9. Adhesive tape according to Claim 8, **characterized in that** the damage sites penetrate the backing in part or fully.

10. Adhesive tape according to one of the preceding claims, **characterized in that** the adhesive tape comprising the backing coated with self-adhesive composition has on one end a non-tacky grip tab, the other end preferably having an adhesive area which decreases towards the end.

11. Adhesive tape according to Claim 10, **characterized in that** the grip tab is formed by film sections, applied by lamination, whose sides in contact with the self-adhesive composition have been given an anti-adhesive finish.

12. Use of a section of an adhesive tape according to one of the preceding claims, **characterized in that** the section coated on both sides with self-adhesive composition is used preassembled on a hook, a baseplate or an article which is to be suspended.

## Revendications

1. Bande adhésive pour un collage à nouveau détachable par traction, sans résidus et sans dégradations, avec un support, qui est revêtu d'un côté ou des deux côtés d'une masse auto-adhésive, à l'exception d'un support en mousse pure, **caractérisée en ce que**
a) une masse auto-adhésive est appliquée sur toute la surface d'au moins un des deux côtés du support, dont le rapport force de déchirement à force de détachement (force de pelage) à un angle de traction inférieur à 10° par rapport à la surface de collage est supérieur à 1,2:1,
b) le support est dégradé de manière ciblée par un traitement préalable, de telle manière que la force de détachement (force de pelage) est diminuée par rapport à une bande auto-adhésive analogue avec un support non dégradé de manière correspondante.

2. Bande adhésive selon la revendication 1, **caractérisée en ce que** le support présente au moins une couche non moussée, de préférence un support sous forme de feuille.

3. Bande adhésive selon l'une quelconque des revendications précédentes, **caractérisée en ce que** le support présente une structure multicouche.

4. Bande adhésive selon la revendication 3, **caractérisée en ce qu'**au moins une couche du support multicouche est une mousse.

5. Bande adhésive selon l'une quelconque des revendications précédentes, **caractérisée en ce que** la masse auto-adhésive est une masse à base de polymères à blocs contenant en particulier des blocs d'aromatiques de vinyle.

6. Bande adhésive selon la revendication 4, **caractérisée en ce que** la masse auto-adhésive est une masse à base de copolymères à blocs contenant des blocs polymères en aromatiques de vinyle (blocs A) et des blocs formés par polymérisation de 1,3-diènes (blocs D).

7. Bande adhésive selon la revendication 6 ou 6, **caractérisée en ce que** la masse auto-adhésive contient un adhésif et le cas échéant d'autres composants mélangés et/ou additifs.

8. Bande adhésive selon l'une quelconque des revendications précédentes, **caractérisée en ce que** la dégradation du support est réalisée par découpe, découpe partielle, perforation ou estampage.

9. Bande adhésive selon la revendication 8, **caractérisée en ce que** les dégradations traversent partiellement ou complètement le support.

10. Bande adhésive selon l'une quelconque des revendications précédentes, **caractérisée en ce que** la bande adhésive constituée du support revêtu d'une masse auto-adhésive présente d'un côté une prise non adhésive, l'autre extrémité présentant de préférence une surface de collage diminuant vers l'extrémité.

11. Bande adhésive selon la revendication 10, **caractérisée en ce que** la prise est formée par une section de feuille contrecollée, dont les faces en contact avec la masse auto-adhésive sont apprêtées de manière anti-adhésive.

12. Utilisation d'une section d'une bande adhésive selon l'une quelconque des revendications précédentes, **caractérisée en ce qu'**on utilise la section revêtue des deux côtés de la masse auto-adhésive de manière préconfectionnée sur un crochet, une plaque de base ou un objet à suspendre.
